(19) Europäisches Patentamt
European Patent Office
Office européen des brevets

(11) **EP 1 912 200 A2**

(12) **EUROPEAN PATENT APPLICATION**

(43) Date of publication:
**16.04.2008 Bulletin 2008/16**

(51) Int Cl.:
***G09G 3/34*** *(2006.01)*

(21) Application number: **07116064.2**

(22) Date of filing: **11.09.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK RS**

(30) Priority: **13.10.2006 KR 20060099916**

(71) Applicant: **Samsung Electronics Co., Ltd.**
**Suwon-si, Gyeonggi-do 442-743 (KR)**

(72) Inventor: **Lee, Seung-eon**
**Gyeonggi-do (KR)**

(74) Representative: **D'Halleweyn, Nele Veerle Trees**
**Gertrudis et al**
**Arnold & Siedsma**
**Sweelinckplein 1**
**2517 GK Den Haag (NL)**

(54) **Driving device of backlight unit, liquid crystal display apparatus having the same, and control method thereof**

(57) A liquid crystal display (LCD) apparatus includes: an LCD panel; a light source unit which emits light to the LCD panel; a heating device which preheats the light source unit; a temperature sensing unit which senses temperature of the light source unit and outputs a temperature information; and a variable voltage supplying unit which changes a driving voltage to be supplied to the heating device according to the temperature information of the temperature sensing unit.

FIG. 1

EP 1 912 200 A2

## Description

BACKGROUND OF INVENTION

Field of Invention

Apparatuses and methods consistent with the present invention relate to a driving device of a backlight unit, a liquid crystal display (LCD) having the same and a control method thereof, and more particularly to a driving device of a backlight unit, an LCD apparatus having the same and a control method thereof which can rapidly stabilize brightness of a light source according to temperature of a light source unit.

Description of the Related Art

An LCD apparatus comprises an LCD panel. The LCD panel comprises a thin film transistor (TFT) substrate, a color filter substrate, and a liquid crystal injected between the TFT substrate and the color filter substrate. Since the LCD panel does not emit light by itself, a backlight unit may be provided at the backside of the TFT substrate to provide light. The penetration amount of an incident light provided by the backlight unit is adjusted according to an alignment of the liquid crystal.

Generally, the backlight unit may be classified into an edge-type and a direct-type. According to the edge-type backlight unit, a light source such as a cold cathode fluorescent lamp (CCFL) and others known in the art is disposed at a lateral side of a light guide plate, and a collection/diffusion sheet is disposed at an upper side of the light guide plate. According to the direct-type backlight unit, a plurality of light sources is disposed at the backside of the LCD panel, and a collection/diffusion film is disposed between the light source and the LCD panel. However, although these types are suitable for an LCD apparatus of a small or medium size such as a notebook, a monitor, and others known in the art, they are not suitable for an LCD apparatus of a large size such as a television in terms of weight, thickness, power consumption, and others known in the art.

Therefore, surface light sources have been developed as a light source which is suitable for an LCD apparatus of a large size. Among the surface light sources, flat fluorescent lamp (FFL) is a planar application of the CCFL theory, and has a structure that a fluorescent layer and a light emitting gas which are sealed between two plane glasses.

However, the FFL requires more time than the CCFL to stabilize brightness. Thus, the FFL is designed to preheat a lamp for a predetermined time using a heating wire before FFL is turned on so that the brightness can be rapidly stabilized. To this end, a constant voltage is used as a driving voltage to heat the heating wire.

However, as the constant voltage is used to heat the heating wire, the heating wire always emits the same calorific value in spite of variable temperature of the lamp. Therefore, a deviation in the temperature of the lamp occurs to influence stability of the brightness.

SUMMARY OF THE INVENTION

Accordingly, it is an aspect of the present invention to provide a driving device of a backlight unit, an LCD apparatus having the same and a control method thereof which can rapidly stabilize brightness of a light source according to temperature of a light source unit.

Another aspect of the present invention is to provide a driving device of a backlight unit, an LCD apparatus having the same and a control method thereof which can adjust calorific value generated by a heating device according to the temperature of the light source unit to decrease deviation in the temperature of the light source unit.

Additional aspects of the present invention will be set forth in part in the description which follows and, in part, will be obvious from the description, or may be learned by practice of the present invention.

The foregoing and/or other aspects of the present invention can be achieved by providing an LCD apparatus comprising: an LCD panel; a light source unit which emits light to the LCD panel; a heating device which preheats the light source unit; a temperature sensing unit which senses temperature of the light source unit and outputs a temperature information; and a variable voltage supplying unit which changes a driving voltage to be supplied to the heating device according to the temperature information of the temperature sensing unit.

According to an aspect of the invention, the temperature sensing unit is a resistance device whose resistance value changes according to temperature change.

According to an aspect of the invention, the resistance device is a thermistor.

According to an aspect of the invention, the thermistor has a negative temperature coefficient (NTC).

According to an aspect of the invention, the variable voltage supplying unit changes the driving voltage supplied to the heating device by voltage change according to change of resistance value of the resistance device.

According to an aspect of the invention, the variable voltage supplying unit comprises an operational amplifier to change the driving voltage supplied to the heating device according to the change of the resistance value of the resistance device.

According to an aspect of the invention, the variable voltage supplying unit further comprises a Zener diode connected to an input terminal of the operational amplifier to receive a predetermined reference voltage.

According to an aspect of the invention, the LCD apparatus further comprises: a switching unit which supplies a predetermined input voltage to the variable voltage supplying unit; and a control unit which outputs a control signal to turn off the switching unit if the temperature information of the temperature sensing unit exceeds a predetermined temperature.

According to an aspect of the invention, the heating device is a heating wire.

According to an aspect of the invention, the light source unit is a surface light source lamp.

According to an aspect of the invention, the LCD apparatus further comprises a light source driving inverter which drives the light source unit.

The foregoing and/or other aspects of the present invention can be achieved by providing a driving device of backlight unit for driving a backlight unit having a light source unit and a heating device to preheat the light source unit, comprising: a temperature sensing unit which senses temperature of the light source unit and outputs temperature information; and a variable voltage supplying unit which changes a driving voltage supplied to the heating device according to the temperature information of the temperature sensing unit.

According to an aspect of the invention, the temperature sensing unit is a resistance device whose resistance value changes according to temperature change.

According to an aspect of the invention, the resistance device is a thermistor having an NTC.

According to an aspect of the invention, the variable voltage supplying unit changes the driving voltage supplied to the heating device by voltage change according to change of resistance value of the resistance device.

According to an aspect of the invention, the variable voltage supplying unit comprises an operational amplifier to change the driving voltage supplied to the heating device according to the change of the resistance value of the resistance device.

According to an aspect of the invention, the driving device of backlight unit further comprises: a switching unit which supplies a predetermined input voltage to the variable voltage supplying unit; and a control unit which outputs a control signal to turn off the switching unit if the temperature information of the temperature sensing unit exceeds a predetermined temperature.

According to an aspect of the invention, the heating device is a heating wire.

According to an aspect of the invention, the light source unit is a surface light source lamp.

The foregoing and/or other aspects of the present invention can be achieved by providing a control method of an LCD apparatus comprising an LCD panel, a light source unit to emit light to the LCD panel, and a heating device to preheat the light source unit, comprising: outputting a temperature information by a temperature sensing unit by sensing temperature of the light source unit; and changing a driving voltage supplied to the heating device according to the temperature information of the temperature sensing unit.

According to an aspect of the invention, the temperature sensing unit is a resistance device whose resistance value changes according to temperature change.

According to an aspect of the invention, changing a driving voltage comprises changing the driving voltage supplied to the heating device by voltage change according to change of the resistance value of the resistance device.

According to an aspect of the invention, the control method of an LCD apparatus further comprises cutting off the driving voltage supplied to the heating device if the temperature information exceeds a predetermined temperature.

BRIEF DESCRIPTION OF THE DRAWINGS

The above and/or other aspects of the present invention will become apparent and more readily appreciated from the following description of the exemplary embodiments, taken in conjunction with the accompanying drawings, in which:

FIG. 1 is a block diagram illustrating a configuration of a liquid crystal display apparatus according to an exemplary embodiment of the present invention.

FIG. 2 is a circuit diagram specifically describing a temperature sensing unit and a variable voltage supplying unit according to the exemplary embodiment of the present invention.

FIG. 3 is a flow diagram illustrating control process of the LCD apparatus according to an exemplary embodiment of the present invention.

DETAILED DESCRIPTION OF EXEMPLARY EMBODIMENTS OF THE INVENTION

Reference will now be made in detail to the exemplary embodiments of the present invention, examples of which are illustrated in the accompanying drawings, wherein like reference numerals refer to like elements throughout. The exemplary embodiments are described below so as to explain the present invention by referring to the figures.

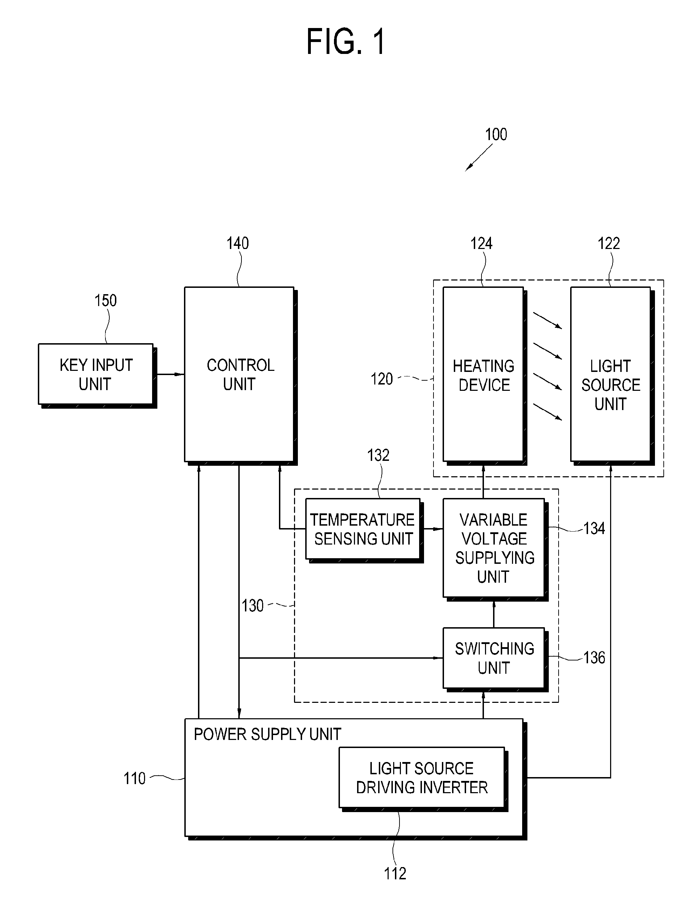

As shown in FIG. 1, an LCD apparatus 100 according to an exemplary embodiment of the present invention comprises a power supply unit 110, a backlight unit 120, a heating device driving unit 130, a control unit 140, and a key input unit 150.

The power supply unit 110 generates a predetermined DC voltage or AC voltage required for configuration of the control unit 140 and the backlight unit 120 from a battery voltage or an input AC voltage. The generated predetermined voltage is supplied to a light source unit 122 of the backlight unit 120, the heating device driving unit 130, and the control unit 140. Especially, the light source unit 122 which emits light requires a large amount of electric power. Therefore, to drive the light source unit 122, the power supply unit 110 comprises a light source driving inverter 112.

The backlight unit 120 is installed to emit light to an LCD panel (not shown), and comprises the light source unit 122 and a heating device 124.

The light source unit 122 is a light source to supply light to the LCD panel, and is preferably but not necessarily a surface light source which comprises FFL. However, the light source unit 122 may also be a related art light source such as CCFL, or other related art lamp.

The heating device 124 is for preheating the light source unit 122, and is preferably but not necessarily a heating wire.

The heating device driving unit 130 is for controlling a calorific value of the heating device 124, and comprises a temperature sensing unit 132, a variable voltage supplying unit 134, and a switching unit 136.

The temperature sensing unit 132 senses temperature of the light source unit 122 or ambient temperature of the light source unit 122. As the temperature to be sensed by the temperature sensing unit 132 is related to the light source unit 122, the sensed temperature is hereinafter called the temperature of the light source unit 122. The temperature information sensed by the temperature sensing unit 132 is supplied to the variable voltage supplying unit 134 and the control unit 140.

The variable voltage supplying unit 134 adjusts a driving voltage to be supplied to the heating device 124 according to the temperature information sensed by the temperature sensing unit 132. Therefore, the calorific value of the heating device 124 varies according to the supplied driving voltage.

If the temperature information sensed by the temperature sensing unit 132 exceeds a predetermined temperature or if a predetermined operating time for preheating elapses, the switching unit 136 cuts off the voltage supplied to the variable voltage supplying unit 34. Especially, if the temperature information sensed by the temperature sensing unit 132 exceeds a predetermined temperature, the switching unit 136 is turned off by a control signal which is output by the control unit 140. Therefore, the brightness is prevented from being further unstable due to heating of the light source unit 122.

The control unit 140 calculates the temperature of the light source unit 122 using the temperature information input by the temperature sensing unit 132. Then, if the temperature of the light source unit 122 exceeds a predetermined temperature or if the preheating time of the heating device 124 elapses beyond a predetermined time, the control unit 140 outputs a control signal to turn off the switching unit 136. The switching unit 136 cuts off the voltage supplied to the variable voltage supplying unit 134 by the control signal. Also, the control unit 140 sends a control signal to the light source driving inverter 112 to control intensity of the light to be emitted by the light source unit 122.

The key input unit 150 receives a command by a user's key operation and supplies the command to the control unit 140. The key input unit 150 may comprise a number of keys attached to the LCD apparatus 100. Also, the key input unit 150 may be provided to receive command input by a remote control or others known in the art.

Hereinafter, operation of the LCD apparatus having the configuration shown in FIG. 1 as the exemplary embodiment of the present invention is described.

If the user pushes a power button of the key input unit 150 to operate the LCD apparatus 100, the control unit 140 senses turn-on status of the power button and controls the power supply unit 110 to operate so that the voltage to be supplied to the light source unit 122 and the variable voltage supplying unit 134 can be generated and output.

Also, the control unit 140 controls the switch of the switching unit 136 to be turned on. Therefore, a predetermined voltage output by the power supply unit 110 is supplied to the variable voltage supplying unit 134.

The temperature sensing unit 132 senses the temperature of the light source unit 122 and supplies the temperature information to the control unit 140. If the temperature information sensed by the temperature sensing unit 132 exceeds a predetermined temperature, the control unit 140 outputs the control signal to turn off the switching unit 136. Therefore, the brightness can be rapidly stabilized compared to a case of continuously heating the heating device 124 for a predetermined time by constant voltage.

Also, the temperature information sensed by the temperature sensing unit 132 is supplied to the variable voltage supplying unit 134. According to the temperature information, the variable voltage supplying unit 134 outputs an adjusted driving voltage to be supplied to the heating device 124. That is, if the temperature sensed by the temperature sensing unit 132 is high, the variable voltage supplying unit 134 outputs the driving voltage to be supplied to the heating device 124 with the driving voltage decreased compared to the sensed temperature being low.

As the calorific value, which is generated by the driving voltage supplied to the heating device 124, is proportional to the electric power P, it is calculated by equation (1).

$$P = V^2/R \ \dots (1)$$

Here, V is the driving voltage supplied to the heating device 124, and R is a resistance of the heating device 124. Accordingly, if the temperature is low, a high driving voltage is supplied to the heating device 124, so that the calorific value is increased. However, if the temperature becomes higher, a low driving voltage is supplied to the heating device 124, so that the calorific value is relatively decreased compared to the temperature being low.

In FIG. 1, the temperature information sensed by the temperature sensing unit 132 is shown to be directly supplied to the variable voltage supplying unit 134. However, the variable voltage supplying unit 134 may be controlled to change the driving voltage supplied to the heating device 124 using the temperature information supplied to the control unit 140. That is, the control unit 140 may output the control signal or control voltage which corresponds to the temperature information, and the variable voltage supplying unit 134 may change and output the driving voltage to be supplied to the heating device 124 according to the control signal or control voltage.

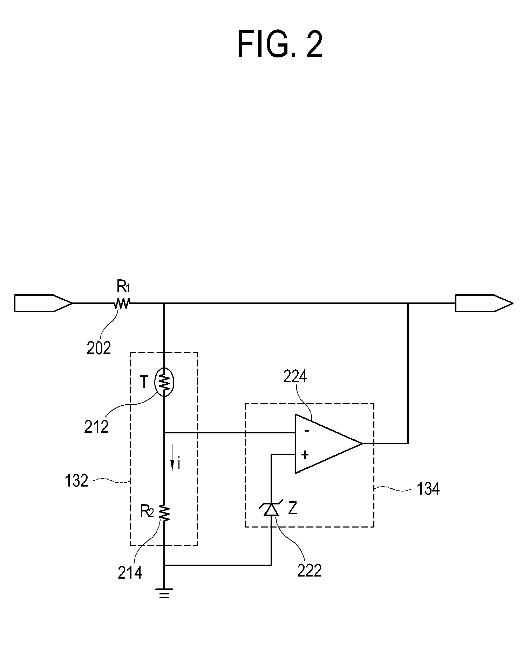

FIG. 2 is a circuit diagram specifically describing the temperature sensing unit 132 and the variable voltage supplying unit 134 shown in FIG. 1 according to the exemplary embodiment of the present invention.

As shown in FIG. 2, the temperature sensing unit 132 comprises a thermistor T 212 and a resistor R2 214. The thermistor T 212 is a resistance device whose resistance value changes according to its temperature, and is preferably but not necessarily a thermistor having an NTC.

As shown in FIG. 2, the variable voltage supplying unit 134 comprises a Zener diode Z 222 and an operational amplifier 224. The Zener diode Z 222 is connected to (+) input terminal of the operational amplifier 224 to supply a predetermined reference voltage to the operational amplifier 224. Since the operational amplifier 224 basically has an infinite voltage gain, a voltage input to (+) input terminal thereof becomes the same as a voltage input to (-) input terminal thereof. Also, since its input impedance is infinite, current in the input terminal becomes 0.

Hereinafter, operations of the temperature sensing unit 132 and the variable voltage supplying unit 134 are explained.

Input voltage input through the switching unit 136 is supplied to the thermistor T 212 and the resistor R2 214 through the resistor R1 202. Nodes of the thermistor T 212 and the resistor R2 214 are connected to the (-) input terminal of the operational amplifier 224. On the other hand, the Zener diode Z 222 is connected to the (+) input terminal of the operational amplifier 224. Therefore, as the Zener diode Z 222 supplies the predetermined reference voltage to the (+) input terminal of the operational amplifier 224, the voltage of the (-) input terminal of the operational amplifier 224 becomes the same as a nominal voltage of the Zener diode Z 222.

For example, if the nominal voltage of the Zener diode Z 222 is 2.5V, the voltage of the (-) input terminal of the operational amplifier 224 also becomes 2.5V. Also, the input impedance of the operational amplifier 224 is infinite, the current flowing into the operational amplifier 224 becomes 0. Therefore, current i flowing in the resistor R2 214 always becomes a constant-current.

The constant-current flowing in the resistor R2 214 equally flows in the thermistor T 212. Therefore, if the resistance value of the thermistor T 212 changes according to temperature change, the driving voltage supplied to the heating device 124 changes. That is, if the temperature of the light source unit 122 rises, the resistance value of the thermistor T 212 decreases. Also, a voltage between both ends of the thermistor T 212, which is calculated by multiplying the resistance of the thermistor T 212 by the current flowing in the resistor R2 214, decreases, resulting in decrease of the driving voltage supplied to the heating device 124.

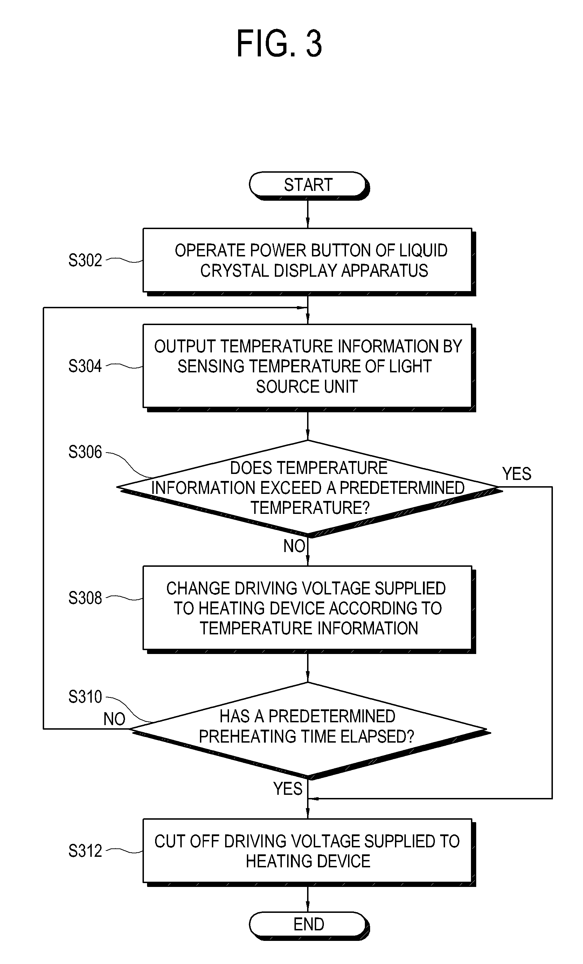

FIG. 3 is a flow diagram to explain control process of the LCD apparatus according to an exemplary embodiment of the present invention.

If the user turns on the power button of the key input unit 150 to operate the LCD apparatus 100, the control unit 140 turns on the power supply unit 110 to generate and output the voltage to be supplied to the light source unit 122 and the variable voltage supplying unit 134.

The temperature sensing unit 132 senses the temperature of the light source unit 122 to output the temperature information to the control unit 140 and the variable voltage supplying unit 134 at S304. If the temperature information sensed by the temperature sensing unit 132 exceeds a predetermined temperature at S306, the control unit 140 outputs the control signal to turn off the switching unit 136. As the switching unit 136 is turned off by the control signal, the driving voltage supplied to the heating device 124 is cut off at S312.

The variable voltage supplying unit 134 changes and outputs the driving voltage supplied to the heating device 124 according to the temperature information at S308. That is, if the temperature sensed by the temperature sensing unit 132 is high, the variable voltage supplying unit 134 outputs the driving voltage to be supplied to the heating device 124 with the driving voltage decreased compared to the sensed temperature being low.

If the preheating time for supplying the driving voltage to the heating device 124 exceeds a predetermined preheating time at S310, the control unit 140 outputs the control signal to turn off the switching unit 136, and the switching unit 136 is turned off by the control signal. Therefore, the driving voltage supplied to the heating device 124 is cut off at S312.

As described above, according to the present invention, the brightness of the lamp can be rapidly stabilized according to the temperature of the light source unit.

Also, according to the present invention, the deviation in the temperature of the lamp can be decreased by changing the calorific value generated by the heating device 124 according to the temperature of the light source unit 122.

Also, according to the present invention, if the temperature of the light source unit 122 exceeds a predetermined temperature, the voltage is cut off to save electric power and prevent overheating.

Although a few exemplary embodiments of the present invention have been shown and described, it will be appreciated by those skilled in the art that changes may be made in these exemplary embodiments without departing from the principles and spirit of the invention, the scope of which is defined in the appended claims and their equivalents.

**Claims**

1. A liquid crystal display (LCD) apparatus, the apparatus comprising:

   an LCD panel;
   a light source unit which emits light to the LCD panel;
   a heating device which preheats the light source unit;
   a temperature sensing unit which senses temperature of the light source unit and outputs a temperature information; and
   a variable voltage supplying unit which changes a driving voltage to be supplied to the heating device according to the temperature information output from the temperature sensing unit.

2. The LCD apparatus according to claim 1, wherein the temperature sensing unit comprises a resistance device whose resistance changes according to temperature change of the resistance device.

3. The LCD apparatus according to claim 2, wherein the resistance device is a thermistor.

4. The LCD apparatus according to claim 3, wherein the thermistor has a negative temperature coefficient.

5. The LCD apparatus according to claim 2 to 4, wherein the variable voltage supplying unit changes the driving voltage supplied to the heating device according to the change of the resistance value of the resistance device.

6. The LCD apparatus according to claim 5, wherein the variable voltage supplying unit comprises an operational amplifier to change the driving voltage supplied to the heating device according to the change of the resistance value of the resistance device.

7. The LCD apparatus according to claim 6, wherein the variable voltage supplying unit further comprises a Zener diode connected to an input terminal of the operational amplifier to receive a reference voltage.

8. The LCD apparatus according to claim 1 further comprising:

   a switching unit which supplies an input voltage to the variable voltage supplying unit; and
   a control unit which outputs a control signal to turn off the switching unit if the temperature information output from the temperature sensing unit exceeds a predetermined temperature.

9. The LCD apparatus according to claim 1, wherein the heating device is a heating wire.

10. The LCD apparatus according to claim 1, wherein the light source unit is a surface light source lamp.

11. The LCD apparatus according to claim 1 further comprising a light source driving inverter which drives the light source unit.

12. A driving device of backlight unit for driving a backlight unit having a light source unit and a heating device to preheat the light source unit, the device comprising:

    a temperature sensing unit which senses temperature of the light source unit and outputs temperature information; and
    a variable voltage supplying unit which changes a driving voltage supplied to the heating device according to the temperature information output from the temperature sensing unit.

13. The driving device of backlight unit according to claim 12, wherein the temperature sensing unit comprises a resistance device whose resistance changes according to temperature change of the resistance device.

14. The driving device of backlight unit according to claim 13, wherein the resistance device is a thermistor having a negative temperature coefficient.

15. The driving device of backlight unit according to claim 13 or 14, wherein the variable voltage supplying unit changes the driving voltage supplied to the heating device according to the change of the resistance value of the resistance device.

16. The driving device of backlight unit according to claim 15, wherein the variable voltage supplying unit comprises an operational amplifier to change the driving voltage supplied to the heating device according to the change of the resistance value of the resistance device.

17. The driving device of backlight unit according to claim 12 further comprising:

    a switching unit which supplies an input voltage to the variable voltage supplying unit; and
    a control unit which outputs a control signal to turn off the switching unit if the temperature information output from the temperature sensing unit exceeds a temperature.

18. The driving device of backlight unit according to claim 12, wherein the heating device is a heating wire.

**19.** The driving device of backlight unit according to claim 12, wherein the light source unit is a surface light source lamp.

**20.** A control method of liquid crystal display (LCD) apparatus comprising an LCD panel, a light source unit to emit light to the LCD panel, and a heating device to preheat the light source unit, the method comprising:

outputting a temperature information by a temperature sensing unit by sensing temperature of the light source unit; and
changing a driving voltage supplied to the heating device according to the temperature information output from the temperature sensing unit.

**21.** The control method of LCD apparatus according to claim 20, wherein the temperature sensing unit comprises a resistance device of which resistance value changes according to temperature change of the resistance device.

**22.** The control method of LCD apparatus according to claim 21, wherein changing a driving voltage comprises changing the driving voltage supplied to the heating device by voltage change according to the change of the resistance value of the resistance device.

**23.** The control method of LCD apparatus according to claim 20 further comprising cutting off the driving voltage supplied to the heating device if the temperature information exceeds a predetermined temperature.

# FIG. 1

# FIG. 2

# FIG. 3

START

S302 — OPERATE POWER BUTTON OF LIQUID CRYSTAL DISPLAY APPARATUS

S304 — OUTPUT TEMPERATURE INFORMATION BY SENSING TEMPERATURE OF LIGHT SOURCE UNIT

S306 — DOES TEMPERATURE INFORMATION EXCEED A PREDETERMINED TEMPERATURE?

YES

NO

S308 — CHANGE DRIVING VOLTAGE SUPPLIED TO HEATING DEVICE ACCORDING TO TEMPERATURE INFORMATION

S310 — HAS A PREDETERMINED PREHEATING TIME ELAPSED?

NO

YES

S312 — CUT OFF DRIVING VOLTAGE SUPPLIED TO HEATING DEVICE

END